# EUROPÄISCHE PATENTSCHRIFT

(11) **EP 1 484 031 B1**
(45) Veröffentlichungstag und Bekanntmachung des Hinweises auf die Patenterteilung: **01.08.2007**
(21) Anmeldenummer: 04013333.2
(22) Anmeldetag: 07.06.2004
(51) Int. Cl.: A61C 13/20

(54) **Verfahren und Vorrichtung zur Herstellung einer dentalkeramischen Struktur**
Method and apparatus for the production of a ceramic dental structure
Procédé et dispositif pour la production d'une structure dentaire en céramique

(30) Priorität: 06.06.2003 DE 10325660
(43) Veröffentlichungstag der Anmeldung: 08.12.2004
(73) Patentinhaber: DeguDent GmbH, 63457 Hanau-Wolfgang (DE)
(72) Erfinder: Kreuder, Peter, 61231 Bad Nauheim (DE); Haizmann, Martin, 63695 Glauburg (DE); Meegdes, Marcel, 61206 Woellstadt (DE)
(74) Vertreter: Stoffregen, Hans-Herbert

(56) Entgegenhaltungen:
- DE-A- 10 037 681
- DE-A- 10 136 584
- DE-U- 9 001 740

## Beschreibung

Die Erfindung bezieht sich auf ein Verfahren zur Herstellung einer dentalkeramischen Struktur durch An-, Über- und/oder Umpressen von Strukturen aus Metall oder Keramik in einer Muffel, umfassend das Herstellen der Muffel durch Einfüllen einer aushärtbaren Einbettmasse in eine eine Muffelbasis, eine Muffelringmanschette sowie einen Muffeldeckel umfassende Vorrichtung und anschließendes Entfernen der ausgehärteten die Muffel bildenden Einbettmasse, wobei von der Muffelbasis zumindest ein Platzhalter ausgeht, durch den in der fertigen Muffel ein Presskanal mit einem Querschnitt q gebildet wird, und anschließendes Verpressen von zumindest einem aus fließfähiger Keramik bestehenden Keramikpellet mit einem Querschnitt qk ≤ q, insbesondere qk ≈ q, durch Verschieben eines Pressstempels in dem zumindest einen Presskanal, um die fließfähige Keramik über zumindest einen von dem Presskanal ausgehenden Angusskanal in einen Hohlraum der Muffel hineinzupressen, der einer Negativform herzustellender Presskeramik entspricht.

Ferner bezieht sich die Erfindung auf eine Vorrichtung zur Herstellung einer dentalkeramischen Struktur durch An-, Über- oder Umpressen von Strukturen aus Metall oder Keramik in einer Muffel, umfassend eine Muffielringmanschette, einen Muffeldeckel, einen Pressstempel sowie eine Muffelbasis, von der zumindest ein Platzhalter ausgeht, durch den in der fertigen Muffel zumindest ein Presskanal gebildet ist, in dem der Pressstempel zum Verpressen von fließfähiger Keramik verschiebbar ist, und wobei der zumindest eine Presskanal einen Querschnitt q aufweist, in den Presskanal zumindest ein Keramikpellet der fließfähigen Keramik mit einem Querschnitt qk mit qk ≤ q, insbesondere qk ≈ q, einbringbar ist und von dem Angusskanäle ausgehen, die in zumindest einen Hohlraum in der Muffel führen, in dem die dentalkeramische Struktur ausgebildet wird.

Um zahntechnische Presskeramikobjekte wie Brücken, Kronen, Veneeres oder Inlays herzustellen, wird zunächst von dem auszubildenden Objekt ein Modell aus Wachs oder Kunststoff ausgebildet und über Wachs oder Kunststoff mit einem Platzhalter verbunden, der von einer Muffelbasis eines Muffelsystems ausgeht, mit dem eine Muffel gegossen wird. Hierzu wird der von Muffelbasis, Muffelringmanschette und Muffeldeckel umgebende, den Platzhalter mit dem Modell aufnehmende Innenraum mit einer Einbettmasse ausgefüllt und sodann ausgehärtet. Nach dem Entfernen von Muffelbasis, Muffelringmanschette und Muffeldeckel wird das Wachs bzw, der Kunststoff ausgeschmolzen, so dass sich in der Muffel ein der Positivform des herzustellenden Objektes entsprechender Hohlraum ausbildet. Sodann werden in den durch den Platzhalter gebildeten Presskanal entsprechend der zu verpressenden Keramik Keramikpellets zusammen mit einem Pressstempel in einen Pressofen eingebracht. Nach Erreichen der Presstemperatur wird die fließfähige Keramikmasse mit Hilfe des Pressstempels in den Hohlraum gedruckt. Durch die Geometrie der bekannten Muffelsysteme bedingt kann nur eine bestimmte Anzahl von Keramikpellets in den Presskanal eingebracht werden, so dass infolgedessen herzustellende Presskeramikobtekte dimensionmäßig eingeschränkt sind.

Ein Muffelsystem der eingangs genannten Art ist mit der Einschränkung der DE-A-102 41 857 zu eninehmen, als dass der Muffelring nicht mit einem Müffeldeckel verschlossen ist. Das Muffelsystem umfasst mehrere Platzhalter, die zueinander beabstandet von einer Muffelbasis ausgehen und z. B. über einen Magneten gehalten werden.

Um nach der DE-A-101 36 584 die Tempetatur innerhalb einer Muffel in der Nähe von zu verpressender Keramik zu messen, gehen von einem Muffeldeckel Vorsprünge aus, die in der herzustellenden Muffel Freiräume bilden, in die Thermoelemente eingebracht werden können. In der Muffel führen Gießkanäle zu Hohlräumen, die zum Pressen die Modelle aufnehmen. Die Gießkanäle ihrerseits gehen dabei vom Bodenbereich eines

Bei einer Muffel nach der DE-U- 90 01 740 werden gleichzeitig mehrere Zahnersatzteile hergestellt. Zu den die Geometrie der Zahnersatzteile vorgegebenen Hohlräume in der Muffel führen verzweigte Gießkanäle, die vom Bodenbereich eines einzigen Pressstempel- oder Kolbenkanals ausgehen.

Der vorliegenden Erfindung liegt die Aufgabe zu Grunde, im gewünschten Umfang Keramik verpressen zu können, wobei auf handelsübliche Keramikpellets zurückgegriffen werden soll. Insbesondere soll die Möglichkeit gegeben sein, weitspannige, große zahnprothetische Strukturen mit Keramikmasse überpressen zu können. Dabei soll eine hohe Stabilität für die Pressstempel beim Verpressen der Keramik aus den Presskanälen gegeben sein.

Erfindungsgemäß wird das Problem durch ein Verfahren der eingangs genannten Art dadurch gelöst, dass die fließfähige Keramik über zumindest zwei über ihre gesamte Länge oder nahezu gesamte Länge ineinander übergehende Presskanäle verpresst wird, wobei in jeden Presskanal zumindest ein Keramikpellet mit einem Querschnitt qk eingebracht wird und die Keramikpellets mit einem Pressstempel mit einer Querschnittsgeometrie verpresst werden, die der der ineinander übergehenden Presskanäle entspricht. Insbesondere ist die Anzahl der Presskanäle derart gewählt, dass diese ein Aufnahmevolumen zum Verpressen von Keramik für eine vielgliedrige Brücke, insbesondere bis zu 14-gliedrige Brücke ermöglicht. Selbstverständlich sind nach der erfindungsgemäßen Lehre auch mehrere kleinere Objekte wie Kronen, Inlays, Onlays oder Veneeres in einem Pressvorgangherstellbar.

Abweichend vom vorbekannten Stand der Technik werden Gerüste großen Unterbaus nicht durch zum Beispiel ein Pulverschlickerverfahren mit Keramikschichten versehen, das ein mehrschichtiges Auftragen der Keramik erforderlich macht, wobei aufgrund des zwischen den einzelnen Brennvorgängen erfolgenden Schrumpfens die Endkeramik nicht immer die gewünschte Okklusion zeigt, sondern es wird ein An-, Über- bzw. Umpressen mittels eines Muffelsystems durchgeführt, das zumindest zwei ineinander übergehende Presskanäle aufweist, in der eine gewünschte Anzahl von Keramikpellets einbringbar und gemeinsam verpressbar sind. Dabei werden die erforderlichen Drücke durch übliche Presseinrichtungen aufgebaut, wobei die Presskanäle und damit die Pressstempel ineinander übergehen, so dass eine hohe Stabilität gegeben ist. Ineinander Übergehen bedeutet dabei, dass die Presskanäle über ihre Höhe oder nahezu über ihre gesamte Höhe miteinander verbunden sind.

Anzumerken ist auch, dass es nicht zwingend erforderlich ist, dass ein Gerüst oder ein sonstiger Unterbau mit Keramik umpresst wird. Vielmehr können nach dem erfindungsgemäßen Verfahren Keramikbauteile selbst hergestellt werden. Bevorzugterweise werden jedoch Brücken, Kronen, Veneeres und Inlays mit Keramik umpresst.

Werden bevorzugterweise die Presskanäle gleichermaßen mit Keramikpellets gefüllt, so besteht selbstverständlich auch die Möglichkeit, die Presskanäle unterschiedlich zu befüllen oder gegebenenfalls einen Presskanal ungefüllt zu lassen. In diesem Fall muss der entsprechende Presskanal in einem Umfang verschlossen werden, dass in diesen die fließfähige Keramik nicht eindringen kann.

Eine Vorrichtung zur Herstellung einer dentalkeramischen Struktur - auch als dentalkeramischer Formkörper zu bezeichnen - der eingangs genannten Art zeichnet sich dadurch aus, dass von der Muffelbasis zumindest zwei Platzhalter mit jeweils einem Querschnitt q ausgehen und dass die Platzhalter über ihre gesamte Länge oder nahezu ihre gesamte Länge ineinander übergehen.

Aufgrund der nebeneinander angeordneten Platzhalter ist der Querschnitt der Muffel größer als bei üblichen Systemen. Um dennoch in der Nähe des in der Muffel ausgebildeten Hohlraums, der mit der fließfähigen Keramik ausgefüllt werden soll, eine Temperaturbestimmung vorzunehmen, ist vorgesehen, dass von Muffelbasis umgebener Freiraum im Querschnitt von Innenwandung der Muffelringmanschette ausgehend abnimmt.

Zur Realisierung ist insbesondere vorgesehen, dass die Muffelbasis aus einem äußeren Aufnahmering für ein Sockelelement besteht, von dem die Platzhalter ausgehen. Dabei ist das Sockelelement aufnahmeringseitig auf einer Stufe abgestützt. Des Weiteren sollte der Aufnahmering muffelseitig einen im Querschnitt trapezförmigen Innenraum begrenzen, entlang dessen Mittelachse sich die Platzhalter erstrecken.

Durch die geometrische Ausbildung des Aufnahmerings ergibt sich folglich eine Muffelgeometrie, die in ihrem presskanalseitigen Endbereich kegelstumpfförmig ausgebildet ist, so dass Temperaturfühler wie Thermoelemente nahe an den mit der Keramikmasse auszufüllenden Hohlraum herangeführt werden können.

Da abweichend vom Stand der Technik die Platzhalter sich nicht rotationssymmetrisch entlang der Mittelachse des von der Muffelringmanschette umgebenen Raums erstrecken, ist vorgesehen, dass das Sockelelement außenseitig eine Aufnahme zum Einbringen eines Abzugselementes aufweist, um das Sockelelement in axialer Richtung der Muffelringmanschette von diesem weg abzuziehen. Somit ist zum Lösen der Muffelbasis ein Verdrehen der Muffelbasis um deren Längsachse nicht erforderlich, wodurch andernfalls eine Beschädigung der Presskanäle erfolgen könnte.

Das Sockelelement, von dem die Platzhalter ausgehen, besteht insbesondere aus einem äußeren zylindrischen ersten Abschnitt und einem sich anschließenden scheibenförmigen inneren zweiten Abschnitt größeren Durchmessers, wobei der zweite Abschnitt geometrisch auf die Stufe des Aufnahmerings abgestimmt ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine Schnittdarstellung einer zusammengesetzten Muffelform,
- Fig. 2: einen Aufnahmering,
- Fig. 3: ein Sockelelement mit von diesem ausgehenden Platzhaltern in Seitenansicht, teilweise gebrochen,
- Fig. 4: eine Draufsicht auf den Sockelhalter gemäß Fig. 3 und
- Fig. 5: eine perspektivische Darstellung eines Pressstempels.

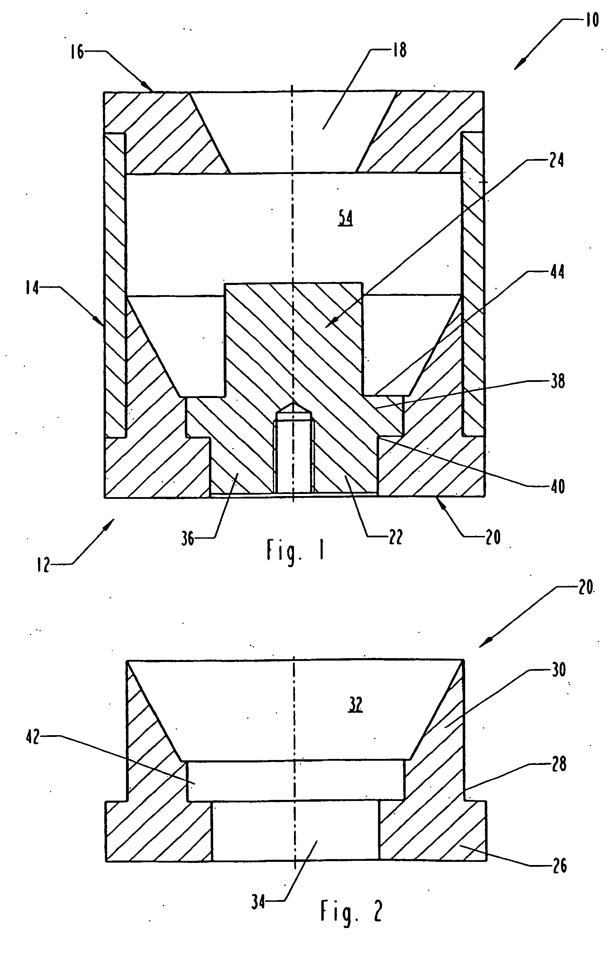

In Fig. 1 ist im Schnitt eine Muffelform 10 bzw. ein Muffelsystem dargestellt, mittels dessen eine Muffel mit in diesem auszubildenden Hohlraum hergestellt wird, in den fließfähige Keramik eingepresst werden soll. Die Muffelform 10 besteht aus einer Muffelbasis 12, einer Muffelringmanschette 14 - auch kurz Muffelring genannt - sowie einen Muffeldeckel 16 mit Einfüllöffnung 18 für eine einzufüllende und auszuhärtende Einbettmasse. Die Muffelbasis 12 ist ihrerseits aus einem äußeren Aufnahmering 20 und einem Sockel 22 mit von diesen ausgehenden Platzhaltern 24 zusammengesetzt.

Der Aufnahmering 20 besteht aus einem zylindrischen Basisabschnitt 26, der über eine umlaufende Stufe 28 in einen inneren Abschnitt 30 übergeht, der im oberen Teil einen im Schnitt trapezförmigen, also trapezoidförmigen Innenraum 32 begrenzt. Der Basisabschnitt 26 weist eine Durchgangsöffnung 34 auf, in der sich ein äußerer Abschnitt 36 des Sockelelementes 22 erstreckt, der in einen scheibenförmigen inneren Abschnitt 38 größeren Durchmessers übergeht. Zwischen dem äußeren Abschnitt 36 und dem inneren Abschnitt 38 verläuft eine Stufe 40, die auf eine umlaufende innere Stufe 42 des Aufnahmerings 20 passgenau dann aufsetzbar ist, wenn der Sockel 22 in den Aufnahmering 20 eingesetzt ist. Von innerer Oberfläche 44 des scheibenförmigen inneren Abschnitts 38 des Socketelementes 22 gehen Platzhalter aus, und zwar im Ausführungsbeispiel insgesamt vier Platzhalter 46, 48, 50, 52, die jeweils einen Querschnitt q aufweisen. Die Platzhalter 46, 48, 50, 52 erstrecken sich in den einerseits von dem Aufhahmering 20 umgebenen trapezoidförmigen Innenraum 32 und - im Ausführungsbeispiel - abschnittsweise im von der Muffelringmanschette 14 umgebenen Innenraum 54 der Muffelform 10.

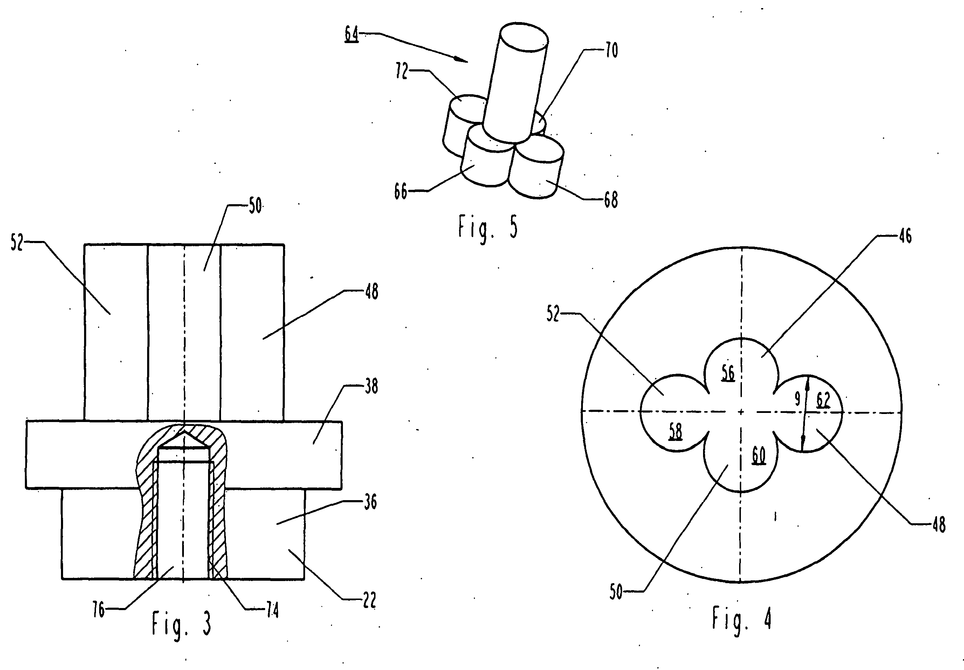

Wie sich aus der Fig. 4 ergibt, gehen die Platzhalter 46, 48, 50, 52 ineinander über, und zwar über ihre gesamte Länge. Somit sind die durch die Platzhalter 46, 48, 50, 52 sich ausbildenden Presskanäle nicht zueinander beabstandet, sondern gehen ineinander über, bilden folglich einen gemeinsamen "Pressraum".

Von den Platzhaltern 46, 48, 50, 52, d. h. deren äußeren Stirnflächen 56, 58, 60, 62 verlaufen spatere Angusskanale bildende Verbindugen zu in dem Innenraum 54 anzuordnendem nicht dargestellten Modell aus Wachs, das insbesondere auf ein Gerüst einer herzustellenden Zahnprothetik aufgebrächt ist, die mit Keramik umpresst werden soll

Nach Zusammensetzen der Muffelform 10 und dem Positionieren des Gerüstes nut dem Wachsmodell wird der Innenraum 54 der Muffelform 10 über die Offnung 18 mit einer Einbettmasse ausgefüllt. Nach Aushärten dieser wird die Muffelform entfernt und die so hergestellte Muffel wird erwärmt, damit das Wachs schmelzen und aus der Muffel abfließen kann. In dem sich hierdurch ausbildenden Hohlraum wird sodann in bekannter Weise Keramik eingepresst. Hierzu werden in die von den Platzhaltern 46, 48, 50, 52 in der Muffel ausgebildeten Presskanäle eine der zu verpressenden Keramikmasse entsprechende Anzahl von Keramikpellets eingebracht, um sodann die Muffel mit den Keramikpellets und einem in die Presskanäle sich erstreckenden Pressstempel 64 in einen Ofen einzubringen, um die Keramikmasse, nachdem diese fließfähig geworden ist, in die Hohlräume der Muffel zu pressen. Dabei weist der Stempel 64 - wie die Prinzipdarstellung der Fig. 5 verdeutlicht - der Querschnittsgeometrie der durch die Platzhalter 46, 48, 50, 52 gebildeten Presskanäle entsprechende ineinander übergehende Stempelabschnitte 66, 68, 70, 72 auf, um durch axiales Verstellen des Pressstempels 64 in Richtung Boden der Presskanäle die Keramikmasse über die von den Presskanälen ausgehenden Angusskanäle in den das Gerüst umgebenen Hohlraum zu verpressen.

Um die Muffelbasis 20 und somit die Platzhalter 56, 58, 60, 62 aus der ausgehärteten Einbettmasse, also aus der Muffel abziehen zu können, ohne erstere zu drehen, geht von dem Sockelelement 22 eine ein Innengewinde 74 aufweisende Bohrung 76 aus, in die eine Kontermutter einschraubbar ist, um das Sockelelement 20, 22 abziehen zu können.

Auch oder alternativ können die Platzhalter 46, 48, 50, 52 gegebenenfalls als verlorene Elemente ausgebildet sein, die in einem Umfang flexibel sind, dass diese durch quasi Zusammendrücken aus der Muffel abgezogen werden können.

## Patentansprüche

1. Verfahren zur Herstellung einer dentalkeramischen Struktur durch An-, Über- und/oder Umpressen von Strukturen aus Metall oder Keramik in einer Muffel, umfassend das
Herstellen der Muffel durch Einfüllen einer aushärtbaren Einbettmasse in eine eine Muffelbasis (12, 20, 22), eine Muffelringmanschette (14) sowie einen Muffeldeckel (16) umfassende Vorrichtung (10) und anschließendes Entfernen der ausgehärteten die Muffel bildenden Einbettmasse, wobei von der Muffelbasis zumindest ein Platzhalter (46, 48, 50, 52) ausgeht, durch den in der fertigen Muffel ein Presskanal mit einem Querschnitt q gebildet wird, und
anschließendes Verpressen von zumindest einem aus fließfähiger Keramik bestehenden Keramikpellet mit einem Querschnitt qk ≤ q, insbesondere qk ≈ q, durch Verschieben eines Pressstempels in dem zumindest einen Presskanal, um die fließfähige Keramik über zumindest einen von dem Presskanal ausgehenden Angusskanal in einen Hohlraum der Muffel hineinzupressen, der einer Negativform herzustellender Presskeramik entspricht,
**dadurch gekennzeichnet,**
**dass** die fließfähige Keramik über zumindest zwei über ihre gesamte Höhe oder nahezu gesamte Höhe ineinander übergehende Presskanäle verpresst wird, wobei in jeden Presskanal zumindest ein Keramikpellet mit einem Querschnitt qk eingebracht wird und die Keramikpellets mit einem Pressstempel (64, 66, 68. 70, 72) mit einer Querschnittsgeometrie verpresst werden, die der der ineinander übergehenden Presskanäle entspricht.

2. Verfahren nach Anspruch 1,
**dadurch gekennzeichnet,**
**dass** im presskanalseitig kegelstumpfförmig ausgebildeten Endbereich der Muffel eine Temperaturmessung erfolgt.

3. Verfahren nach Anspruch 1,
**dadurch gekennzeichnet,**
**dass** die Presskanäle mit einer voneinander abweichenden Anzahl von Keramikpellets befüllt werden.

4. Vorrichtung zur Herstellung einer dentalkeramischen Struktur durch An-, Über- oder Umpressen von Strukturen aus Metall oder Keramik in einer Muffel, umfassend eine Muffelringmanschelte (14), einen Muffeldeckel (16), einen Pressstempel (64) sowie eine Muffelbasis (12, 20, 22), von der zumindest ein Platzhalter (46, 48, 50, 52) ausgeht, durch den in der fertigen Muffel zumindest ein Presskanal gebildet ist, in dem der Pressstempel zum Verpressen von fließfähiger Keramik verschiebbar ist, und wobei der zumindest eine Presskanal einen Querschnitt q aufweist, in den Presskanal zumindest ein Keramikpellet der fließfähigen Keramik mit einem Querschnitt qk mit qk ≤ q, insbesondere qk = q, einbringbar ist und von dem Angusskanäle ausgehen, die in zumindest einen Hohlraum in der Muffel führen, in dem die dentalkeramische Struktur ausgebildet wird,
**dadurch gekennzeichnet,**
**dass** von der Muffelbasis (12, 20, 22) zumindest zwei Platzhalter (46, 48, 50, 52) mit jeweils einem Querschnitt q ausgehen und dass die Platzhalter über ihre gesamte Länge oder nahezu ihre gesamte Länge ineinander übergehen.

5. Vorrichtung nach Anspruch 4,
**dadurch gekennzeichnet,**
**dass** die Muffelbasis (12) aus einem äußeren Aufnahmering (20) und einem von diesem aufgenommenen Sockelelement (22) besteht, von dem die Platzhalter (46, 48, 50, 52) ausgehen.

6. Vorrichtung nach Anspruch 5,
**dadurch gekennzeichnet,**
**dass** das Sockelelement (22) aufnahmeringinnenseitig auf einer Stufe (28) abgestützt ist.

7. Vorrichtung nach zumindest Anspruch 5,
**dadurch gekennzeichnet,**
**dass** das Sockelelement (20) außenseitig eine Aufnahme für ein Abzugselement zum Abziehen des Sockelelementes in axiale Richtung der Muffel aufweist.

8. Vorrichtung nach zumindest Anspruch 5,
**dadurch gekennzeichnet,**
**dass** der Aufnahmering (20) muffelseitig einen im Querschnitt trapezförmigen Innenraum (32) begrenzt, entlang dessen Mittelachse sich die Platzhalter (46, 48, 50, 52) erstrecken.

9. Vorrichtung nach zumindest einem der Ansprüche 5 bis 7,
**dadurch gekennzeichnet,**
**dass** das Sockelelement (22) aus einem äußeren zylindrischen ersten Abschnitt (36) und einem sich anschließenden scheibenförmigen inneren zweiten Abschnitt (38) größeren Durchmessers zusammensetzt, der geometrisch auf die Stufe (28) des Aufnahmerings (20) angepasst ist.

10. Vorrichtung nach zumindest Anspruch 5,
**dadurch gekennzeichnet,**
**dass** von dem Sockelelement (22) n Platzhalter (46, 48, 50, 52) mit n > 2 ausgehen.

11. Vorrichtung nach zumindest Anspruch 10,
**dadurch gekennzeichnet,**
**dass** von dem Sockelelement (20) vier Platzhalter (46,48,50,52) ausgehen.

12. Vorrichtung nach zumindest Anspruch 4,
**dadurch gekennzeichnet,**
**dass** die Platzhalter (46, 48, 50, 52) als verlorene Platzhalter ausgebildet sind.

## Claims

1. Method for producing a ceramic dental structure by pressing on, pressing over and/or coating structures made of metal or ceramic in a muffle, the said method comprising
the producing of the muffle by means of filling a hardenable packing compound into a device (10), which comprises a muffle base (12, 20, 22), a muffle annular sleeve (14) and a muffle cover (16), and subsequently removing the hardened packing compound that forms the muffle, wherein at least one place locator (46, 48, 50, 52) extends from the muffle base, a pressing channel with a cross-section q being formed in the finished muffle by means of the said place locator, and
subsequently pressing at least one ceramic pellet that comprises flowable ceramic and has a cross-section qk ≤ q, more especially qk ^{∼} q, by displacing a ram in the at least one pressing channel in order to press the flowable ceramic into a hollow space of the muffle, which corresponds to a negative form of the pressing ceramic to be produced, by means of at least one sprue channel that extends from the pressing channel,
**characterised in that**
the flowable ceramic is pressed by means of at least two pressing channels that merge into one another over their entire height or almost their entire height, wherein at least one ceramic pellet with a cross-section qk is inserted into each pressing channel and the ceramic pellets are pressed using a ram (64, 66, 68, 70, 72) with a cross-section geometry that corresponds to that of the pressing channels that merge into one another.

2. Method according to claim 1, **characterised in that** a temperature measurement is effected in the truncated cone-shaped end region of the muffle on the side of the pressing channel.

3. Method according to claim 1, **characterised in that** the pressing channels are filled with a differing number of ceramic pellets.

4. Device for producing a ceramic dental structure by pressing on, pressing over or coating structures made of metal or ceramic in a muffle, the said device comprising an annular muffle sleeve (14), a muffle cover (16), a ram (64) as well as a muffle base (12, 20, 22), from which at least one place locator (46, 48, 50, 52) extends, by means of which the at least one pressing channel is formed in the finished muffle, in which pressing channel the ram is displaceable for pressing flowable ceramic, and wherein the at least one pressing channel has a cross-section q, at least one ceramic pellet of the flowable ceramic with a cross-section qk where qk ≤ q, more especially qk ^{∼} q, being insertable into the pressing channel and sprue channels extending from the said at least one pressing channel, the said sprue channels leading to at least one hollow space in the muffle, in which the ceramic dental structure is formed, **characterised in that** at least two place locators (46, 48, 50, 52) each with a cross-section q extend from the muffle base (12, 20, 22) and **in that** the place locators merge into one another over their entire length or almost their entire length..

5. Device according to claim 4, **characterised In that** the muffle base (12) comprises an outer receiving ring (20) and a support element (22) that is received by the said receiving ring, the place locators (46, 48, 50, 52) extending from the said support element.

6. Device according to claim 5, **characterised in that** the support element (22) is supported on the inside of the receiving ring on a step (28).

7. Device according to at least claim 5, **characterised in that** the support element (20) includes on the outside a receiving means for a withdrawal element for withdrawing the support element in the axial direction of the muffle.

8. Device according to at least claim 5, **characterised in that** the receiving ring (20), on the side of the muffle, defines an interior space (32) that is trapezoidal in cross-section, the place locators (46, 48. 50, 52) extending along the central axis of the said interior space.

9. Device according to at least one of claims 5 to 7, **characterised in that** the support element (22) is assembled from an outer cylindrical first portion (36) and, connected thereto, a disc-shaped inner second portion (38) with a larger diameter, which is adapted in a geometric manner to the step (28) of the receiving ring (20).

10. Device according to at least claim 5, **characterised in that** n place locators (46, 48, 50, 52) where n > 2 extend from the support element (22).

11. Device according to at least claim 10, **characterised in that** four place locators (46, 48, 50, 52) extend from the support element (20).

12. Device according to at least claim 4, **characterised in that** the place locators (46, 48, 50, 52) are in the form of lost place locators.

## Revendications

1. Procédé de fabrication d'une structure dentaire en céramique, par pression contre, au-dessus et/ou autour de structures en métal ou en céramique dans un moufle, comprenant :
- la fabrication du moufle en introduisant une masse de scellement pouvant être durcie, dans un dispositif (10) comprenant une base de moufle (12, 20, 22), une gaine annulaire de moufle (14) ainsi qu'un couvercle de moufle (16) et ensuite en retirant la masse de scellement durcie formant le moufle, alors qu'un pivot de place partant (46, 48, 50, 52)de la base de moufle, forme dans le moufle terminé un canal de pressage avec une section q, et
- le pressage ultérieur d'au moins une pastille de céramique coulable de section qk ≤ q, particulièrement qk ≈ q, en poussant un poinçon de pressage dans l'au moins un canal de pressage afin de mouler par pression la céramique coulable par au moins un canal de coulée partant du canal de pressage dans une cavité du moufle qui correspond à un moule négatif de la céramique de pressage à fabriquer,
**caractérisé en ce que**
la céramique coulable est moulée par au moins deux canaux de pressage se raccordant l'un dans l'autre sur toute leur hauteur ou presque toute leur hauteur, en plaçant dans chaque canal de pressage au moins une pastille de céramique avec une section qk, et les pastilles de céramique sont moulées par pression avec un poinçon de pressage (64, 66, 68, 70, 72) dont la géométrie de section correspond à celle des canaux de pressage se raccordant l'un dans l'autre.

2. Procédé selon la revendication 1,
**caractérisé en ce qu'**
on mesure la température dans la zone d'extrémité de forme tronconique formée du côté du canal de pressage du moufle.

3. Procédé selon la revendication 1,
**caractérisé en ce que**
les canaux de pressage sont remplis avec un nombre de pastilles de céramique différent l'un de l'autre.

4. Dispositif de fabrication d'une structure dentaire en céramique par une pression contre, au-dessus ou autour de structures en métal ou en céramique dans un moufle comprenant
une gaine annulaire de moufle (14), un couvercle de moufle (16), un poinçon de pressage (64) ainsi qu'une base de moufle (12, 20, 22) de laquelle part au moins un pivot de place (46, 48, 50, 52), formant dans le moufle terminé au moins un canal de pressage, dans lequel le poinçon de pressage peut être poussé pour mouler par pression une céramique coulable, et dont au moins un canal de pression présente une section q, en introduisant au moins une pastille de céramique coulable de section qk avec qk ≤ q, particulièrement qk ≈ q dans le canal de pression, d'où partent des canaux de coulée qui conduisent dans au moins une cavité du moufle dans laquelle la structure dentaire en céramique est formée,
**caractérisé en ce que**
de la base de moufle (12, 20, 22) partent au moins deux pivots de place(46, 48, 50, 52) respectivement de section q, et les pivots de place se raccordent l'un dans l'autre sur toute leur longueur ou presque toute leur longueur.

5. Dispositif selon la revendication 4,
**caractérisé en ce que**
la base de moufle (12) est composée d'un anneau de réception externe (20) recevant un élément de socle (22) d'où partent les pivots de place (46, 48, 50, 52).

6. Dispositif selon la revendication 5,
**caractérisé en ce que**
l'élément de socle (22) s'appuie sur un épaulement (28) du côté interne de l'anneau de réception externe (20).

7. Dispositif selon au moins la revendication 5,
**caractérisé en ce que**
l'élément de socle (22) présente du côté externe un logement pour un élément d'extraction servant à retirer l'élément de socle dans le sens axial du moufle.

8. Dispositif selon au moins la revendication 5,
**caractérisé en ce que**
l'anneau de réception (20) délimite du côté du moufle une chambre intérieure (32) de section trapézoïdale, et les pivots de place (46, 48, 50, 52) s'étendent le long de l'axe central de cette chambre.

9. Dispositif selon au moins l'une des revendications 5 à 7,
**caractérisé en ce que**
l'élément de socle (22) est composé d'une première section cylindrique externe (36) rattachée (38) à une deuxième section interne discoïdale, dont le diamètre est plus grand et adapté géométriquement à l'épaulement (28) de l'anneau de réception (20).

10. Dispositif selon au moins la revendication 5,
**caractérisé en ce que**
n pivots de place(46, 48, 50, 52) partent de l'élément de socle (22), avec n > 2.

11. Dispositif selon au moins la revendication 10,
**caractérisé en ce que**
quatre pivots de place (46, 48, 50, 52) partent de l'élément de socle (22).

12. Dispositif selon au moins la revendication 4,
**caractérisé en ce que**
les pivots de place (46, 48, 50, 52) sont des éléments perdus.
